# FASCICULE DE BREVET EUROPEEN

(11) **EP 3 934 110 B1**
(45) Date de publication et mention de la délivrance du brevet: **27.09.2023**
(21) Numéro de dépôt: 21181346.4
(22) Date de dépôt: 24.06.2021
(51) Int. Cl.: H04B 3/54

(54) **PROCÉDÉ ET DISPOSITIF DE TRANSMISSION D'UN MESSAGE**
VERFAHREN UND VORRICHTUNG ZUR ÜBERTRAGUNG EINER NACHRICHT
METHOD AND DEVICE FOR TRANSMITTING A MESSAGE

(30) Priorité: 01.07.2020 FR 2006937
(43) Date de publication de la demande: 05.01.2022
(73) Titulaire: Sagemcom Energy & Telecom SAS, 92500 Rueil-Malmaison (FR)
(72) Inventeur: BAROIS, Jérôme, 92500 RUEIL MALMAISON (FR); ROTER, Ziv, 92500 RUEIL MALMAISON (FR)
(74) Mandataire: Cabinet Le Guen Maillet

(56) Documents cités:
- US-A1- 2012 134 395

## Description

### DOMAINE TECHNIQUE

Au moins un mode de réalisation concerne un procédé de transmission d'un message à partir d'un premier dispositif noeud vers un deuxième dispositif noeud appartenant à un voisinage du premier dispositif noeud, lesdits premier et deuxième dispositifs noeuds appartenant à un réseau de communication par courants porteurs en ligne. Au moins un mode de réalisation concerne un dispositif mettant en oeuvre le procédé.

### ETAT DE LA TECHNIQUE ANTERIEURE

Les communications par courants porteurs en ligne PLC (« PowerLine Communications » en anglais) se développent, notamment dans le cadre des réseaux d'alimentation électrique de type AMM (« Automated Meter Management » en anglais). Des réseaux de communication sont ainsi implémentés au-dessus de réseaux d'alimentation électrique pour la collecte automatisée par un dispositif noeud de base (aussi appelé « concentrateur de données ») du réseau, auprès de compteurs électriques intelligents (« smart electricity meters » en anglais), de données de relevés de consommation énergétique que lesdits compteurs électriques intelligents sont respectivement en charge de surveiller.

La norme de communication G3-PLC est définie pour permettre aux différents dispositifs noeuds (notamment concentrateur de données et compteurs électriques intelligents) d'un tel réseau de communiquer entre eux. La norme est spécifiée dans la recommandation ITU-T G.9903 laquelle décrit notamment la couche physique (PHY) et la couche liaison de données (DLL) du modèle OSI. La norme G3-PLC est destinée à être exploitée dans des bandes fréquentielles allant de 10-490 kHz. Elle supporte plus particulièrement les bandes fréquentielles suivantes : la bande fréquentielle CENELEC A, qui va approximativement de 35 kHz à 91 kHz ; la bande fréquentielle FCC, qui va approximativement de 150 kHz à 480 kHz ; la bande fréquentielle ARIB, qui va aussi approximativement de 150 kHz à 400 kHz ; et la bande fréquentielle CENELEC B, qui va approximativement de 98 kHz à 122 kHz. Ces différentes bandes fréquentielles présentent des caractéristiques différentes en termes de débit, portée, résistance aux perturbateurs, etc.

Toutefois, la norme G3-PLC ne permet l'utilisation que d'une seule desdites bandes fréquentielles pour un dispositif noeud donné. Plus exactement, les dispositifs noeuds récents peuvent parfois supporter plusieurs bandes fréquentielles, mais pas en même temps. Une reconfiguration est alors nécessaire pour passer d'une première bande fréquentielle à une seconde bande fréquentielle. Ainsi, lorsque dans un réseau de communication il est nécessaire de reconfigurer, dans une nouvelle bande fréquentielle, un ensemble de dispositifs concentrateurs de données et un ensemble de compteurs électriques qui lui sont associés, une reconfiguration peut se montrer particulièrement complexe. Par exemple, un dispositif compteur n'ayant pas pu réceptionner un message lui indiquant de changer de bande fréquentielle peut devenir incapable de communiquer avec le dispositif concentrateur de données auquel il est associé, après que ce dernier ait pu, quant à lui, changer de bande fréquentielle.

Or, les besoins en termes de ressources des réseaux de communication, notamment dans le déploiement des réseaux d'alimentation électrique de type AMM, grandissent de jour en jour. La bande fréquentielle pour laquelle les éléments constitutifs d'un réseau ont été certifiés peut se retrouver en limite de capacité, ce qui fait obstacle à une augmentation du nombre d'échanges dans le réseau, par exemple pour introduire de nouvelles fonctionnalités ou encore de nouveaux besoins applicatifs, par exemple.

La demande de brevet US 2012/134395 A1 divulgue un procédé pour mettre en oeuvre des communications par ligne électrique dans différents domaines de tension en utilisant plusieurs sous-bandes de fréquence.

### EXPOSE DE L'INVENTION

A cette fin, selon un premier aspect, l'invention propose un procédé de transmission d'un message d'un premier dispositif noeud vers un deuxième dispositif noeud appartenant à un voisinage dudit premier dispositif noeud, lesdits premier et deuxième dispositifs noeuds appartenant à un réseau d'alimentation électrique utilisant des communications par courants porteurs en ligne, caractérisé en ce que le premier dispositif noeud est apte à émettre et recevoir des messages sur plusieurs bandes fréquentielles d'un ensemble de bandes fréquentielles et en ce que le procédé est exécuté par le premier dispositif noeud et comporte les étapes préalablement à la transmission du message, de :
- estimation, pour chaque bande fréquentielle, de la durée d'émission théorique du message dans chaque bande fréquentielle,
- obtention d'une base de données, de résultats d'intégration de taux d'occupation de chaque bande fréquentielle déterminés pendant plusieurs échelles de temps correspondant à la durée d'émission théorique du message dans chaque bande fréquentielle,
- sélection à partir des résultats d'intégration de taux d'occupation de chaque bande fréquentielle déterminés pendant plusieurs échelles de temps obtenus, d'une bande fréquentielle,
- transmission du message dans la bande fréquentielle sélectionnée.

L'invention concerne aussi un dispositif de transmission d'un message d'un premier dispositif noeud vers un deuxième dispositif noeud appartenant à un voisinage dudit premier dispositif noeud, lesdits premier et deuxième dispositifs noeuds appartenant à un réseau d'alimentation électrique utilisant des communications par courants porteurs en ligne, caractérisé en ce que le premier dispositif noeud est apte à émettre et recevoir des messages sur plusieurs bandes fréquentielles d'un ensemble de bandes fréquentielles et en ce que le premier dispositif noeud comporte :
- des moyens d'estimation, préalablement à la transmission d'un message, pour chaque bande fréquentielle, de la durée d'émission théorique du message dans chaque bande fréquentielle,
- des moyens d'obtention d'une base de données, de résultats d'intégration de taux d'occupation de chaque bande fréquentielle déterminés pendant plusieurs échelles de temps correspondant à la durée d'émission théorique du message dans chaque bande fréquentielle,
- des moyens de sélection à partir des résultats d'intégration de taux d'occupation de chaque bande fréquentielle déterminés pendant plusieurs échelles de temps obtenus, d'une bande fréquentielle,
- des moyens de transmission du message dans la bande fréquentielle sélectionnée.

Ainsi, la présente invention permet de bénéficier des avantages, en termes de débit, portée, résistance aux perturbateurs, des différentes bandes fréquentielles.

De plus, en déterminant des taux d'occupation de chaque bande fréquentielle sur plusieurs échelles de temps, il est possible de prendre en compte et d'anticiper les variations cycliques de l'occupation du réseau de communication. Les variations cycliques de l'occupation du réseau de communication sont liées par exemple aux interrogations cycliques par un concentrateur pour obtenir des courbes de charges des compteurs. Ces interrogations peuvent être faites selon une périodicité horaire, journalière ou autre.

Selon un mode particulier de l'invention, les résultats d'intégration de taux d'occupation de chaque bande fréquentielle sont déterminés pendant trois échelles de temps, une deuxième échelle de temps étant supérieure à une première échelle de temps et inférieure à une troisième échelle de temps.

Selon un mode particulier de l'invention, la première échelle de temps est la minute, la deuxième échelle de temps est l'heure, la troisième échelle de temps est la journée.

Selon un mode particulier de l'invention, la base de données mémorise des résultats d'intégration de taux d'occupation de chaque bande fréquentielle déterminés pendant la première échelle de temps sur une durée d'une heure, mémorise des résultats d'intégration de taux d'occupation de chaque bande fréquentielle déterminés pendant la deuxième échelle de temps sur une durée de vingt-quatre heures et mémorise des résultats d'intégration de taux d'occupation de chaque bande fréquentielle déterminés pendant la troisième échelle de temps sur une durée d'une semaine.

Selon un mode particulier, les bandes fréquentielles sont disjointes.

Selon un mode particulier de l'invention, l'ensemble de bandes fréquentielles comprend :
- la bande fréquentielle CENELEC A;
- la bande fréquentielle CENELEC B; et
- la bande fréquentielle FCC ou la bande fréquentielle ARIB.

La présente invention concerne aussi un produit programme d'ordinateur. Il comprend des instructions pour implémenter, par un dispositif noeud, le procédé selon l'un des modes de réalisation précédents, lorsque ledit programme est exécuté par un processeur du dispositif noeud.

La présente invention concerne aussi un support de stockage. Il stocke un programme d'ordinateur comprenant des instructions pour implémenter, par un dispositif noeud, le procédé selon l'un des modes de réalisation précédents, lorsque ledit programme est exécuté par un processeur du dispositif noeud.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] illustre schématiquement un réseau de communication selon un mode de réalisation ;
[Fig. 2] illustre schématiquement un procédé de génération et de mise à jour d'une base de données pour chaque bande fréquentielle du réseau de communication selon la présente invention ;
[Fig. 3] illustre schématiquement un procédé de sélection d'au moins une bande fréquentielle du réseau de communication pour l'émission d'un message selon la présente invention ;
[Fig. 4] illustre schématiquement un exemple d'architecture matérielle d'un dispositif noeud du réseau de communication selon un mode de réalisation.

### EXPOSE DETAILLE DE MODES DE REALISATION

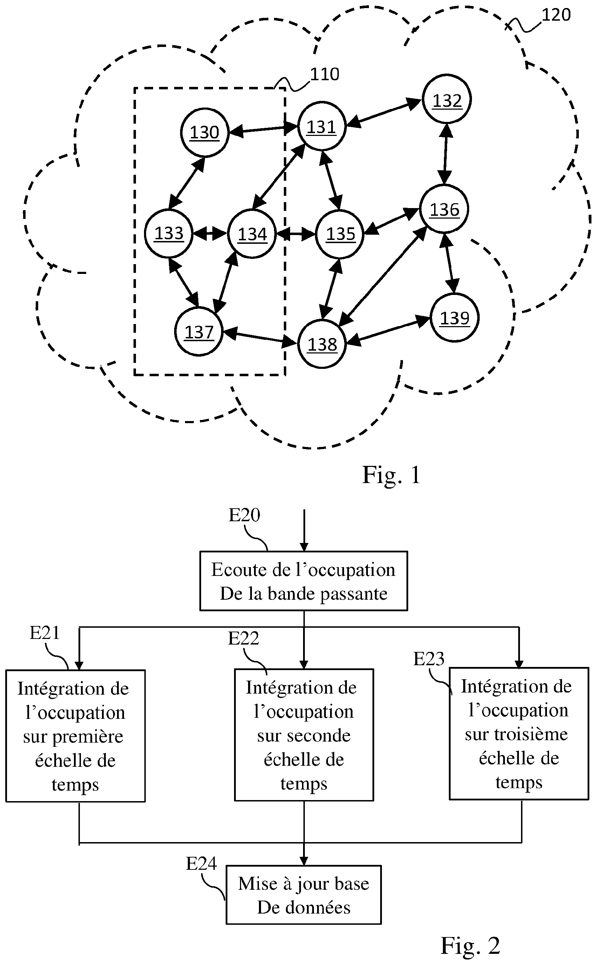

La **Fig.** 1 illustre schématiquement un réseau de communication 120. Le réseau de communication 120 s'appuie sur des communications par courants porteurs en ligne PLC. Le réseau de communication 120 est par exemple un réseau d'alimentation électrique de type AMM permettant à un dispositif noeud de base (aussi appelé « concentrateur de données ») de collecter, auprès de compteurs électriques intelligents, des données de relevés de consommation énergétique d'installations électriques que lesdits compteurs électriques intelligents sont respectivement en charge de surveiller. Le concentrateur de données et les compteurs électriques intelligents sont ainsi des dispositifs noeuds du réseau de communication 120. Le réseau de communication 120 peut comporter d'autres dispositifs noeuds, par exemple installés au niveau de transformateurs électriques. Ainsi, le réseau de communication 120 a une structure maillée, telle que représentée schématiquement sur la Fig. 1 grâce à des flèches, où des dispositifs noeuds jouent le rôle de relais pour augmenter la portée des communications dans le réseau de communication 120, comme détaillé ci-après. Ainsi, un même compteur électrique intelligent dispose potentiellement de plusieurs chemins pour atteindre le concentrateur de données, et vice versa.

La présente invention est ainsi particulièrement adaptée au contexte de la technologie G3-PLC (marque déposée).

Le réseau de communication 120 comporte ainsi une pluralité de dispositifs noeuds 130, 131, 132, 133, 134, 135, 136, 137, 138, 139. A chaque dispositif noeud du réseau de communication 120 est associé un voisinage réseau. Sur la Fig. 1, le dispositif noeud 133 est associé à un voisinage réseau 110 englobant les dispositifs noeuds 130, 134 et 137. En effet, dans le réseau de communication 120, un signal ou un message diffusé par un dispositif noeud (tel que le dispositif noeud 133) n'est en général pas visible en tout point dudit réseau de communication. Chaque dispositif noeud émetteur de signaux ou de messages dispose alors d'un voisinage réseau, c'est-à-dire d'un sous-ensemble dudit réseau de communication 120 dans lequel tout dispositif noeud peut recevoir de manière intelligible lesdits signaux ou messages directement en provenance du dispositif noeud ayant diffusé lesdits signaux ou messages. Le voisinage réseau correspond à la portée des signaux émis, en fonction de paramètres prédéterminés de transmission (e.g. puissance, schéma de modulation et de codage, topologie réseau...) du dispositif noeud à la source desdits signaux et aussi potentiellement en fonction de caractéristiques du canal de communication (atténuation, bruit, impédance...).

Pour communiquer entre dispositifs noeuds voisins (c'est-à-dire des dispositifs noeuds qui sont dans le voisinage réseau l'un de l'autre), les messages sont transmis sous forme de trames modulées. Plusieurs bandes fréquentielles sont définies pour supporter la transmission de ces trames modulées, un schéma de modulation adapté est associé à chacune de ces bandes fréquentielles. Chaque trame transmise sous forme de signaux modulés débute par un préambule prédéfini en fonction du schéma de modulation selon lequel lesdits signaux ont été modulés. Le préambule est adapté pour permettre de se synchroniser en réception sur ladite trame, c'est-à-dire de pouvoir déterminer un instant effectif de début de trame. Pour ce faire, le préambule comporte typiquement une pluralité de copies successives d'un même symbole. Le contenu effectif et la durée du préambule sont ainsi prédéfinis et dépendent du schéma de modulation utilisé. Les préambules de plusieurs trames sont identiques lorsque le même schéma de modulation est appliqué, et diffèrent sinon.

Les schémas de modulation applicables (et des schémas de démodulation correspondants) sont préférentiellement des schémas de modulation (respectivement schémas de démodulation) multi-porteuse de type OFDM (« Orthogonal Frequency Division Multiplex » en anglais).

En termes de bandes fréquentielles utilisables dans le cadre de la mise en oeuvre du réseau de communication 120, on peut citer : la bande fréquentielle CENELEC A, qui va d'approximativement 35 kHz à 91 kHz ; la bande fréquentielle FCC, qui va approximativement de 150 kHz à 480 kHz ; la bande fréquentielle ARIB, qui va aussi approximativement de 150 kHz à 400 kHz ; et la bande fréquentielle CENELEC B, qui va approximativement de 98 kHz à 122 kHz. Il est alors possible d'utiliser : un premier schéma de modulation à trente-six porteuses dans la bande fréquentielle CENELEC A ; un deuxième schéma de modulation à soixante-douze porteuses dans la bande fréquentielle FCC ; un troisième schéma de modulation à cinquante-quatre porteuses dans la bande fréquentielle ARIB ; et un quatrième schéma de modulation à seize porteuses dans la bande fréquentielle CENELEC B.

La **Fig. 2** illustre schématiquement un procédé de génération et de mise à jour par un dispositif noeud d'une base de données pour chaque bande fréquentielle du réseau de communication selon la présente invention.

Le procédé est exécuté en permanence par chaque dispositif noeud qui est apte à émettre et recevoir des messages sur plusieurs bandes fréquentielles du réseau de communication. Les bandes fréquentielles associées sont par exemple sélectionnées dans l'ensemble des bandes fréquentielles autorisées par G3-PLC, i.e. CENELEC A, CENELEC B, et ARIB ou FCC.

Le procédé tel que décrit en Fig. 2 est exécuté en parallèle pour chaque bande fréquentielle sur laquelle le dispositif noeud est apte à émettre et recevoir des messages.

A l'étape E20, le dispositif noeud détermine le taux d'occupation de la bande fréquentielle. Le taux d'occupation est par exemple déterminé en utilisant le mécanisme utilisé dans la méthode d'écoute d'un Support à Accès Multiple CSMA/CA (en anglais Carrier Sense Multiple Access with Collision Avoidance). Le mécanisme permet de vérifier à tout moment si la bande fréquentielle est occupée ou non. Le taux d'occupation est calculé en mesurant pendant la fenêtre temporelle le temps d'occupation de la bande de fréquence. Par exemple, la fenêtre temporelle est égale à une minute et le taux d'occupation indique, pour la minute, le nombre de secondes pendant lequel la bande fréquentielle est occupée. A l'étape E21, le dispositif noeud intègre les taux d'occupation déterminés pendant une première échelle de temps. La première échelle de temps est par exemple égale à une minute. Par exemple, le dispositif noeud calcule la moyenne des soixante taux d'occupation déterminés pendant la minute.

Le résultat de l'intégration est ensuite mémorisé à l'étape E24 dans une base de données en association avec un marqueur temporel.

La base de données comporte un premier nombre donné de résultats d'intégrations pendant la première échelle de temps sur une première durée. Par exemple, la première durée est égale à une heure et le premier nombre donné est égal à soixante.

Par exemple, la première durée est égale à vingt-quatre heures et le premier nombre donné est égal à mille quatre cents.

A l'étape E22, le dispositif noeud intègre les taux d'occupation déterminés pendant une deuxième échelle de temps. La deuxième échelle de temps est supérieure à la première échelle de temps. La deuxième échelle de temps est par exemple égale à une heure. Par exemple, le dispositif noeud calcule la moyenne des trois mille six cents taux d'occupation déterminés pendant l'heure.

Le résultat de l'intégration est ensuite mémorisé à l'étape E24 dans une base de données en association avec un horodatage.

La base de données comporte un deuxième nombre donné de résultats d'intégrations pendant la deuxième échelle de temps sur une deuxième durée. Par exemple, la deuxième durée est égale à vingt-quatre heures et le deuxième nombre donné est égal à vingt-quatre. Par exemple, la deuxième durée est égale à vingt-quatre heures et le deuxième nombre donné est égal à cent soixante-huit.

A l'étape E23, le dispositif noeud intègre les taux d'occupation déterminés pendant une troisième échelle de temps. La troisième échelle de temps est supérieure à la deuxième échelle de temps. La troisième échelle de temps est par exemple égale à vingt-quatre heures. Par exemple, le dispositif noeud calcule la moyenne des deux cent seize mille taux d'occupation déterminés pendant vingt-quatre heures.

Le résultat de l'intégration est ensuite mémorisé à l'étape E24 dans une base de données en association avec un marqueur temporel.

La base de données comporte un troisième nombre donné de résultats d'intégrations pendant la troisième échelle de temps sur une troisième durée. Par exemple, la troisième durée est égale à sept jours et le troisième nombre donné est égal à sept.

Par exemple, la troisième durée est égale à sept jours et le troisième nombre donné est égal à vingt-huit.

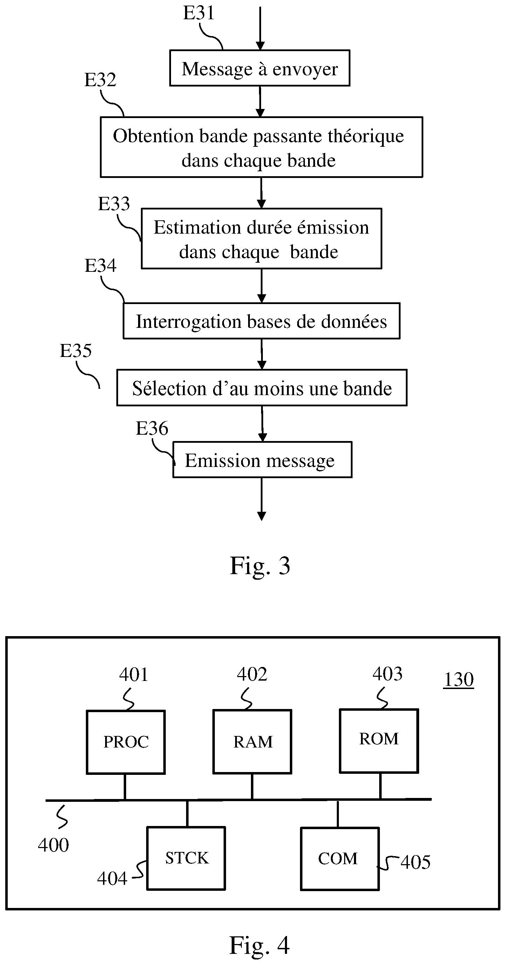

La **Fig. 3** illustre schématiquement un procédé de sélection d'au moins une bande fréquentielle du réseau de communication pour l'émission d'un message selon la présente invention.

Le procédé est exécuté à chaque envoi d'un message par chaque dispositif noeud qui est apte à émettre et recevoir des messages sur plusieurs bandes fréquentielles du réseau de communication.

Les bandes fréquentielles associées sont par exemple sélectionnées dans l'ensemble des bandes fréquentielles autorisées par G3-PLC, i.e. CENELEC A, CENELEC B, et ARIB ou FCC.

A l'étape E31, le dispositif noeud a un message à envoyer sur le réseau de communication. A l'étape E32, le dispositif noeud obtient le débit théorique de chaque bande fréquentielle sur laquelle le dispositif noeud est apte à émettre et recevoir des messages.

Comme mentionné précédemment, chaque bande fréquentielle a, pour chaque type de modulation utilisée dans la bande fréquentielle, un débit théorique donné. Le dispositif noeud obtient le débit théorique de chaque bande fréquentielle sur laquelle le dispositif noeud est apte à émettre et recevoir des messages correspondant à la modulation utilisée pour l'envoi du message au noeud vers lequel le message doit être transféré.

A l'étape E33, le dispositif noeud estime, pour chaque bande fréquentielle, la durée d'émission théorique du message dans la bande fréquentielle.

A l'étape E34, le dispositif noeud interroge la base de données pour obtenir les résultats d'intégration correspondant à la durée d'émission théorique du message dans chaque bande fréquentielle.

Ainsi, le dispositif noeud obtient, pour chaque bande fréquentielle, le nombre de résultats d'intégrations pendant la première échelle de temps correspondant à la durée d'émission théorique du message dans la bande fréquentielle. Le dispositif noeud obtient le nombre de résultats d'intégrations pendant la deuxième échelle de temps correspondant à l'heure à laquelle le message doit être envoyé. Le dispositif noeud obtient le nombre de résultats d'intégrations pendant la troisième échelle de temps correspondant au jour auquel le message doit être envoyé.

A l'étape E35, le dispositif noeud sélectionne la bande fréquentielle parmi les bandes fréquentielles pour laquelle les résultats d'intégration sont les plus faibles.

Par exemple, le dispositif noeud calcule pour chaque bande fréquentielle, la moyenne des résultats d'intégrations pendant les première, deuxième et troisième échelles de temps et sélectionne la bande fréquentielle pour laquelle la moyenne calculée est la plus faible.

En variante, un poids est affecté aux résultats d'intégrations pendant les première, deuxième et troisième échelles de temps avant le calcul de la moyenne.

Par exemple un poids de 10 est affecté aux résultats d'intégrations pendant la première échelle de temps, un poids de 12 est affecté aux résultats d'intégrations pendant la deuxième échelle de temps et un poids de 7 est affecté aux résultats d'intégrations pendant la troisième échelle de temps.

A l'étape E36, le dispositif noeud transfère le message dans la bande fréquentielle sélectionnée.

La **Fig. 4** illustre schématiquement un exemple d'architecture matérielle d'un dispositif noeud du réseau de communication selon un mode de réalisation.

Un tel dispositif noeud est qualifié de multi-bande car capable de transmettre un message sur plusieurs bandes fréquentielles. On note que la Fig. 4 pourrait aussi illustrer schématiquement un exemple d'architecture matérielle d'un module de traitement compris dans le dispositif noeud.

Selon l'exemple d'architecture matérielle représenté à la Fig. 4, le dispositif noeud 130 comprend alors, reliés par un bus de communication 400 : un processeur ou CPU (« Central Processing Unit » en anglais) 401 ; une mémoire vive RAM (« Random Access Memory » en anglais) 402 ; une mémoire morte ROM (« Read Only Memory » en anglais) 403 ; une unité de stockage telle qu'un disque dur (ou un lecteur de support de stockage, tel qu'un lecteur de cartes SD (« Secure Digital » en anglais) 404 ; au moins une interface de communication 405 permettant au dispositif noeud 130 de communiquer avec les dispositifs noeuds appartenant à son voisinage, e.g. les noeuds 131 et 133.

Le processeur 401 est capable d'exécuter des instructions chargées dans la RAM 402 à partir de la ROM 403, d'une mémoire externe (non représentée), d'un support de stockage (tel qu'une carte SD), ou d'un réseau de communication. Lorsque le dispositif noeud est mis sous tension, le processeur 401 est capable de lire de la RAM 402 des instructions et de les exécuter. Ces instructions forment un programme d'ordinateur causant la mise en oeuvre, par le processeur 401, de tout ou partie des procédés décrits en relation avec les Figs. 2 et 3.

Les procédés décrits ci-après en relation avec les Figs. 2 et 3 peuvent être implémentés sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, le dispositif noeud 130 comprend de la circuiterie électronique configurée pour mettre en oeuvre les procédés décrits en relation avec les Figs. 2 et 3.

## Revendications

1. Procédé de transmission d'un message d'un premier dispositif noeud vers un deuxième dispositif noeud appartenant à un voisinage dudit premier dispositif noeud, lesdits premier et deuxième dispositifs noeuds appartenant à un réseau d'alimentation électrique utilisant des communications par courants porteurs en ligne, le premier dispositif noeud étant apte à émettre et recevoir des messages sur plusieurs bandes fréquentielles d'un ensemble de bandes fréquentielles, le procédé étant exécuté par le premier dispositif noeud et comportant les étapes préalablement à la transmission du message, de :
- estimation (E33), pour chaque bande fréquentielle, de la durée d'émission théorique du message dans chaque bande fréquentielle,
- obtention (E34) d'une base de données, de résultats d'intégration de taux d'occupation de chaque bande fréquentielle déterminés pendant plusieurs échelles de temps correspondant à la durée d'émission théorique du message dans chaque bande fréquentielle,
- sélection (E35) à partir des résultats d'intégration de taux d'occupation de chaque bande fréquentielle déterminés pendant plusieurs échelles de temps obtenus, d'une bande fréquentielle, et
- transmission (E36) du message dans la bande fréquentielle sélectionnée.

2. Procédé selon la revendication 1, **caractérisé en ce que** les résultats d'intégration de taux d'occupation de chaque bande fréquentielle sont déterminés pendant trois échelles de temps, une deuxième échelle de temps étant supérieure à une première échelle de temps et inférieure à une troisième échelle de temps.

3. Procédé selon la revendication 2, **caractérisé en ce que** la première échelle de temps est la minute, la deuxième échelle de temps est l'heure, la troisième échelle de temps est la journée.

4. Procédé selon la revendication 3, **caractérisé en ce que** la base de données mémorise des résultats d'intégration de taux d'occupation de chaque bande fréquentielle déterminés pendant la première échelle de temps sur une durée d'une heure, mémorise des résultats d'intégration de taux d'occupation de chaque bande fréquentielle déterminés pendant la deuxième échelle de temps sur une durée de vingt-quatre heures et mémorise des résultats d'intégration de taux d'occupation de chaque bande fréquentielle déterminés pendant la troisième échelle de temps sur une durée d'une semaine.

5. Procédé selon l'une des revendications 1 à 4, dans lequel ledit ensemble de bandes fréquentielles comprend :
- la bande fréquentielle CENELEC A;
- la bande fréquentielle CENELEC B; et
- la bande fréquentielle FCC ou la bande fréquentielle ARIB.

6. Dispositif de transmission d'un message d'un premier dispositif noeud vers un deuxième dispositif noeud appartenant à un voisinage dudit premier dispositif noeud, lesdits premier et deuxième dispositifs noeuds appartenant à un réseau d'alimentation électrique utilisant des communications par courants porteurs en ligne, le premier dispositif noeud étant apte à émettre et recevoir des messages sur plusieurs bandes fréquentielles d'un ensemble de bandes fréquentielles et le premier dispositif noeud comportant :
- des moyens d'estimation, préalablement à la transmission d'un message, pour chaque bande fréquentielle, de la durée d'émission théorique du message dans chaque bande fréquentielle,
- des moyens d'obtention d'une base de données, de résultats d'intégration de taux d'occupation de chaque bande fréquentielle déterminés pendant plusieurs échelles de temps correspondant à la durée d'émission théorique du message dans chaque bande fréquentielle,
- des moyens de sélection à partir des résultats d'intégration de taux d'occupation de chaque bande fréquentielle déterminés pendant plusieurs échelles de temps obtenus, d'une bande fréquentielle, et
- des moyens de transmission du message dans la bande fréquentielle sélectionnée.

7. Un produit programme d'ordinateur **caractérisé en ce qu'**il comprend des instructions pour implémenter, par un dispositif noeud, le procédé selon l'une quelconque des revendications 1 à 5, lorsque ledit programme est exécuté par un processeur du dispositif noeud.

8. Un support de stockage **caractérisé en ce qu'**il stocke un programme d'ordinateur comprenant des instructions pour implémenter, par un dispositif noeud, le procédé selon l'une quelconque des revendications 1 à 5, lorsque ledit programme est exécuté par un processeur du dispositif noeud.

## Patentansprüche

1. Verfahren zur Übertragung einer Nachricht von einer ersten Knotenvorrichtung zur einer zweiten Knotenvorrichtung, die zu einer Umgebung der ersten Knotenvorrichtung gehört, wobei die ersten und zweiten Knotenvorrichtungen zu einem Stromversorgungsnetz gehören, das Powerline-Kommunikationen verwendet, wobei die erste Knotenvorrichtung fähig ist, Nachrichten auf mehreren Frequenzbändern einer Einheit von Frequenzbändern zu senden und zu empfangen, wobei das Verfahren von der ersten Knotenvorrichtung ausgeführt wird und vor der Übertragung der Nachricht die folgenden Schritte aufweist :
- Schätzung (E33) der theoretischen Sendedauer der Nachricht in jedem Frequenzband für jedes Frequenzband,
- Erhalt (E34) von Integrationsergebnissen von Belegungsraten jedes Frequenzbands von einer Datenbank, die während mehrerer Zeitskalen bestimmt werden, die der theoretischen Sendedauer der Nachricht in jedem Frequenzband entsprechen,
- Auswahl (E35) eines Frequenzbands ausgehend von den Integrationsergebnissen von Belegungsraten jedes Frequenzbands, die während mehrerer erhaltener Zeitskalen bestimmt werden, und
- Übertragung (E36) der Nachricht im ausgewählten Frequenzband.

2. Verfahren nach Anspruch 1, **dadurch gekennzeichnet, dass** die Integrationsergebnisse von Belegungsraten jedes Frequenzbands während drei Zeitskalen bestimmt werden, wobei eine zweite Zeitskala größer ist als eine erste Zeitskala und kleiner als eine dritte Zeitskala.

3. Verfahren nach Anspruch 2, **dadurch gekennzeichnet, dass** die erste Zeitskala die Minute, die zweite Zeitskala die Stunde, die dritte Zeitskala der Tag ist.

4. Verfahren nach Anspruch 3, **dadurch gekennzeichnet, dass** die Datenbank Integrationsergebnisse von Belegungsraten jedes Frequenzbands speichert, die während der ersten Zeitskala über die Dauer einer Stunde bestimmt werden, Integrationsergebnisse von Belegungsraten jedes Frequenzbands speichert, die während der zweiten Zeitskala über eine Dauer von vierundzwanzig Stunden bestimmt werden, und Integrationsergebnisse von Belegungsraten jedes Frequenzbands speichert, die während der dritten Zeitskala über eine Dauer einer Woche bestimmt werden.

5. Verfahren nach einem der Ansprüche 1 bis 4, wobei die Einheit von Frequenzbändern enthält :
- das Frequenzband CENELEC A;
- das Frequenzband CENELEC B; und
- das Frequenzband FCC oder das Frequenzband ARIB.

6. Vorrichtung zur Übertragung einer Nachricht von einer ersten Knotenvorrichtung zur einer zweiten Knotenvorrichtung, die zu einer Umgebung der ersten Knotenvorrichtung gehört, wobei die ersten und zweiten Knotenvorrichtungen zu einem Stromversorgungsnetz gehören, das Powerline-Kommunikationen verwendet, wobei die erste Knotenvorrichtung fähig ist, Nachrichten auf mehreren Frequenzbändern einer Einheit von Frequenzbändern zu senden und zu empfangen, wobei die erste Knotenvorrichtung aufweist :
- Einrichtungen zur Schätzung, vor der Übertragung einer Nachricht, der theoretischen Sendedauer der Nachricht in jedem Frequenzband für jedes Frequenzband,
- Einrichtungen zum Erhalt von Integrationsergebnissen von Belegungsraten jedes Frequenzbands von einer Datenbank, die während mehreren Zeitskalen bestimmt werden, die der theoretischen Sendedauer der Nachricht in jedem Frequenzband entsprechen,
- Einrichtungen zur Auswahl eines Frequenzbands ausgehend von den Integrationsergebnissen von Belegungsraten jedes Frequenzbands, die während mehrerer erhaltener Zeitskalen bestimmt werden, und
- Einrichtungen zur Übertragung der Nachricht im ausgewählten Frequenzband.

7. Computerprogrammprodukt, **dadurch gekennzeichnet, dass** es Anweisungen enthält, um das Verfahren nach einem der Ansprüche 1 bis 5 durch eine Knotenvorrichtung zu implementieren, wenn das Programm von einem Prozessor der Knotenvorrichtung ausgeführt wird.

8. Speicherträger, **dadurch gekennzeichnet, dass** er ein Computerprogramm speichert, das Anweisungen enthält, um das Verfahren nach einem der Ansprüche 1 bis 5 durch eine Knotenvorrichtung zu implementieren, wenn das Programm von einem Prozessor der Knotenvorrichtung ausgeführt wird..

## Claims

1. Method for transmitting a message from a first node device to a second node device belonging to a neighbourhood of said first node device, said first and second node devices belonging to an electrical power supply network using powerline communications, the first node device being able to transmit and receive messages over several frequency bands of a set of frequency bands, the method being executed by the first node device and comprising the steps, prior to the transmission of the message, of:
- estimating (E33), for each frequency band, the theoretical duration of transmission of the message in each frequency band,
- obtaining (E34), from a database, results from integration of rates of occupancy of each frequency band determined during several time scales corresponding to the theoretical duration of transmission of the message in each frequency band,
- selecting (E35), from the results of integration of rates of occupancy of each frequency band determined during several time scales obtained, a frequency band, and
- transmitting (E36) the message in the frequency band selected.

2. Method according to Claim 1, **characterized in that** the results of integration of the rates of occupancy of each frequency band are determined during three time scales, a second time scale being greater than a first time scale and less than a third time scale.

3. Method according to Claim 2, **characterized in that** the first time scale is a minute, the second time scale is an hour, the third time scale is a day.

4. Method according to Claim 3, **characterized in that** the database memorizes results of integration of rates of occupancy of each frequency band determined during the first time scale over a duration of one hour, memorizes results of integration of rates of occupancy of each frequency band determined during the second time scale over a duration of twenty four hours and memorizes results of integration of rates of occupancy of each frequency band determined during the third time scale over a duration of one week.

5. Method according to one of Claims 1 to 4, wherein said set of frequency bands comprises:
- the CENELEC A frequency band;
- the CENELEC B frequency band; and
- the FCC frequency band or the ARIB frequency band.

6. Device for transmitting a message from a first node device to a second node device belonging to a neighbourhood of said first node device, said first and second node devices belonging to an electrical power supply network using powerline communications, the first node device being able to transmit and receive messages over several frequency bands of a set of frequency bands and the first node comprising:
- means for estimating, prior to the transmission of a message, for each frequency band, the theoretical duration of transmission of the message in each frequency band;
- means for obtaining, from a database, results of integration of rates of occupancy of each frequency band determined during several time scales corresponding to the theoretical transmission of the message in each frequency band;
- means for selecting, from the results of integration of rates of occupancy of each frequency band determined during several time scales obtained, a frequency band, and
- means for transmitting the message in the frequency band selected.

7. Computer program product, **characterized in that** it comprises instructions for implementing, by a node device, the method according to any one of Claims 1 to 5, when said program is run by a processor of the node device.

8. Storage medium, **characterized in that** it stores a computer program comprising instructions for implementing, by a node device, the method according to any one of Claims 1 to 5, when said program is run by a processor of the node device.
